Europäisches Patentamt

European Patent Office

Office européen des brevets

(19)

(11) Veröffentlichungsnummer: **0 033 367**

**A1**

(12) **EUROPÄISCHE PATENTANMELDUNG**

(21) Anmeldenummer: **80107134.1**

(22) Anmeldetag: **18.11.80**

(51) Int. Cl.³: **D 06 F 58/28**
**G 05 D 22/02**

(30) Priorität: **04.02.80 DE 3003982**

(43) Veröffentlichungstag der Anmeldung:
**12.08.81 Patentblatt 81/32**

(84) Benannte Vertragsstaaten:
**DE FR GB NL**

(71) Anmelder: **Bosch-Siemens Hausgeräte GmbH Stuttgart Patent- und Vertragswesen Hochstrasse 17 D-8000 München 80(DE)**

(72) Erfinder: **Krüger, Manfred Bechstadter Weg 11 D-1000 Berlin 31(DE)**

(54) Steuervorrichtung für einen Haushalt-Wäschetrockner.

(57) Bei einer Steuervorrichtung für einen Haushalt-Wäschetrockner mit in einer bewegbaren Wäschetrommel angeordneten Fühlelektroden, die bei wechselnder Berührung mit mehr oder weniger feuchten Wäschestücken wechselnde elektrische Meßgrößen abtasten und zur Bemessung der Einschaltdauer eines Impulszählers an eine Auswerteschaltung weiterleiten, soll das Trockenergebnis von besonders kleinen und besonders heterogenen Wäscheposten verbessert werden.

Diese Aufgabe wird dadurch gelöst, daß der Impulszähler (7) auf seine voreingestellte Startstufe (71, 72, 73) zurücksetzbar geschaltet ist, sobald die Auswerteschaltung (6) ein Stoppsignal ("1" auf "0") abgibt, das dem Übergang von trockenen auf feuchte abgetastete Wäschestücke entspricht.

FIG. 2

0033367

BOSCH-SIEMENS HAUSGERÄTE GMBH
Stuttgart

8 München, den 17.11.1980
Hochstraße 17

TZP 80/202 E Ry/Wk

## Steuervorrichtung für einen Haushalt-Wäschetrockner

Die Erfindung geht aus von einer Steuervorrichtung für einen Haushalt-Wäschetrockner mit in einer bewegbaren Wäschetrommel angeordneten Fühlelektroden, die bei wechselnder Berührung mit mehr oder weniger feuchten Wäschestücken wechselnde elektrische Meßgrößen abtasten und zur Bemessung der Einschaltdauer eines Impulszählers an eine Auswerteschaltung weiterleiten.

Eine derartige Steuervorrichtung ist aus der DE-AS 16 10 295 bekannt. Darin tasten die Fühlelektroden den elektrischen Widerstand feuchter Wäschestücke, welche beide Fühlelektroden gleichzeitig berühren, ab. Nach geeigneter Umformung dieser elektrischen Meßgröße wird über eine eine Glimmröhre und einen Thyristor enthaltende Auswerteschaltung als Impulszähler ein Zeitwerkmotor immer dann durch eine gleichfrequente Impulsfolge, nämlich der Netzspannung mit 50 Hz, in Gang gesetzt, wenn die Elektroden ohne Berührung von Wäsche oder mit Berührung von bereits trockener Wäsche einen großen elektrischen Widerstand signalisieren. Nach Integration einer vorher einstellbaren Gesamtdauer aller solcher Zeitabschnitte beendet der Impulszähler den Trockenprozess.

Beim Betrieb von Haushalt-Wäschetrocknern werden häufig kleine Wäschemengen oder solche Wäscheposten in den Trockner geladen, die sich aus Wäscheteilen mit sehr unterschiedlichen Gewebearten zusammensetzen. Dabei kann es im ersten Fall häufig
zu längeren Zeitabschnitten kommen, in denen die Fühlelektroden von keinem Wäschestück, sei es auch noch feucht genug,
berührt werden. Im zweiten Fall besteht häufig die Möglichkeit, daß die Fühlelektroden überwiegend von solchen Wäschestücken berührt werden, die schon trocken oder fast trocken
sind, während noch andere Wäschestücke in der Trommel einen
hohen Feuchtigkeitsgrad aufweisen.

Bei der bekannten Steuervorrichtung würde in solchen Fällen
der Zeitwerkmotor diese Zeitabschnitte ebenfalls erfassen und
in die Integration einbeziehen. Die Folge wäre eine Untertrocknung des Wäschepostens, d.h. bei kleinen Wäscheposten
wären nahezu alle Wäschestücke noch feuchter und bei heterogenen Wäscheposten wären wenigstens diejenigen Wäschestücke
noch feuchter als die Bedienungsperson es wünscht, die aufgrund ihrer Gewebestruktur mehr Feuchtigkeit in sich aufzunehmen vermögen.

Der Erfindung liegt die Aufgabe zugrunde, diesen Nachteil bei
einer Steuervorrichtung der eingangs genannten Art zu vermeiden. Auch bei den vorstehend beschriebenen schwierigen Wäscheposten sollen alle einzelnen Wäscheteile wunschgemäß getrocknet sein.

Erfindungsgemäß wird diese Aufgabe dadurch gelöst, daß der
Impulszähler auf seine voreingestellte Startstufe zurücksetzbar geschaltet ist, sobald die Auswerteschaltung ein
Stoppsignal abgibt, das dem Übergang von trockenen auf feuchte abgetastete Wäschestücke entspricht. Ein solches Stoppsignal wirkt sich immer in der Weise aus, daß der Impulszähler angehalten wird. Hat der Impulszähler aber seine
höchste Zählstufe noch nicht erreicht, dann wird er erfindungsgemäß auf die voreingestellte Startstufe zurückgesetzt.

TZP 80/202 E

Dem Fachmann bereitet die Realisierung der erfindungsgemäßen
Schaltung mit den heute üblichen elektronischen Mitteln keine Schwierigkeiten.

In einer vorteilhaft weitergebildeten Schaltung der erfindungsgemäßen Steuervorrichtung sind die voreinstellbaren Startstufen des Impulszählers mit einem Rücksetz-Tor verbindbar, das bei Überschreiten
der höchsten Zählstufe des Impulszählers gesperrt ist und im
entsperrten Zustand ein Setzsignal abgibt, wenn am Ausgang
der Auswerteschaltung das Stoppsignal erscheint. Bei einem
Impulszähler, der nur seriell, nicht aber parallel ausgelesen werden kann, erscheint diese ausgeführte Schaltung als besonders sicher und einfach.

Eine weitere Ausbildung der erfindungsgemäßen Steuervorrichtung hat einen Impulszähler, der einen allgemeinen Löscheingang aufweist, der mit dem Ausgang der Auswerteschaltung verbunden ist und nur ein Eingangssignal bildet, wenn das Stoppsignal erscheint. Auf diese einfache Weise kann die im Zähler fortgeschaltene Information kein Fehlverhalten mehr verursachen.

In einer weiteren ebenfalls vorteilhaften Weiterbildung der
Erfindung ist dem Löscheingang des Impulszählers eine Leseschaltung zugeordnet, deren Ausgang mit der voreingestellten
Startstufe verbindbar ist und beim Auslesen einer belegten
Zählstufe das Setzsignal führt. Eine solche Ausführung ist
besonders gut geeignet für solche Impulszähler, die parallel
auslesbar sind und ihre Information an die Leseschaltung abgeben. Diese Information kann dann unbewertet der voreingestellten Startstufe wieder zugeführt werden.

All die Variationen der erfindungsgemäßen Steuervorrichtung
wirken in der Weise, daß der Impulszähler immer wieder in der voreingestellten Schaltstufe zu zählen beginnt, wenn er seine End-Zählstufe nicht überschritten hatte, bevor nach längeren Zeitabschnitten ohne Wäscheberührung oder mit Berührung trockener Wäsche wieder ein feuchtes Wäschestück die Fühlelektroden überbrückt hat. Wenn der Impulszähler seine End-Zählstufe überschritten hat, gibt er ein Ausgangssignal zum Beenden des Trockenprozesses ab; dann wird auch die Steuervorrichtung stillgesetzt.

Anhand der in der Zeichnung dargestellten Ausführungsbeispiele ist die Erfindung nachstehend erläutert. Es zeigen:

Fig. 1 in seitlicher Durchsicht schematisch einen Haushalt-Wäschetrockner mit am Innenumfang der Trommel angeordneten Fühlelektroden,

Fig. 2 ein Blockschaltbild für die erfindungsgemäße Steuervorrichtung und

Fig. 3 eine andere Ausführung für ein Blockschaltbild der erfindungsgemäßen Steuervorrichtung.

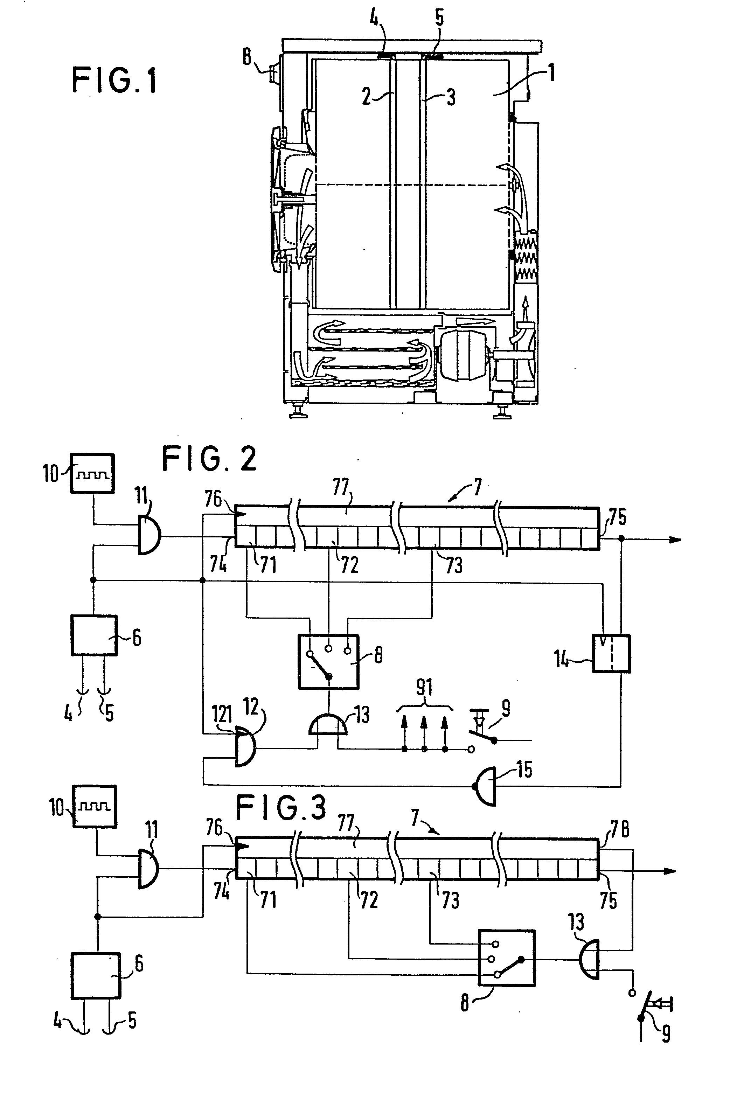

Die für die Erläuterung wesentlichen Teile des Wäschetrockners in Figur 1 sind die Wäschetrommel 1 mit am Innenumfang der Trommel angeordneten ringförmigen Elektroden, die mit am Aussenumfang der Trommel angebrachten Schleifbahnen 2 und 3 in galvanischem Kontakt stehen. Die Schleifbahnen stehen ihrerseits in Kontakt mit Schleifern 4 und 5, die galvanisch mit einer Impulsformerschaltung 6 (Figur 2 und 3) verbunden sind. Zur Voreinstellung des gewünschten Trockenergebnisses ist der Vorwahlschalter 8 vorgesehen.

Der Ausgang der Auswerteschaltung 6 führt immer dann Spannung, wenn die Schleifer 4 und 5 zwischen sich einen sehr hohen elektrischen Widerstand aufweisen, also beispielsweise, wenn die die Fühlelektroden berührenden Wäschestücke bereits nahezu trocken sind. Solange diese Wäschestücke feucht sind,
führt der Ausgang der Auswerteschaltung 6 keine Spannung. Sie
kann im übrigen ähnlich der Schaltung in der DE-AS 16 10 295
aufgebaut sein. Die Steuervorrichtung enthält einen Impulszähler 7, mit einzelnen Zählstufen, von denen die Zählstufen 71,
72 und 73 als voreinstellbare Startstufen mit einem Vorwahlschalter 8 verbunden sind. Dieser Vorwahlschalter kann beispielsweise entsprechend drei unterschiedlichen Feuchtigkeitsstufen des
zu behandelnden Wäschepostens ("schranktrocken" in Stufe 71,
"bügelfeucht" in Stufe 72 und "mangelfeucht" in Stufe 73) von
der Bedienungsperson voreingestellt werden. Sobald die Bedienungsperson die Starttaste 9 betätigt, wird über den voreingestellten Vorwahlschalter 8 die entsprechende Startstufe gesetzt.
In der gezeichneten Darstellung wird die Stufe 71 für das Trockenergebnis "schranktrocken" gesetzt. Beim Betätigen der Starttaste
wird das Startsignal über weitere Leitungen 91 auch an andere
Signalempfänger geleitet, die für die Erfindung unbedeutend sind.

Die Steuervorrichtung enthält ferner einen Taktgenerator 10,
der beispielsweise Impulse von einer Sekunde Periodenlänge abgibt. Solange der Ausgang der Auswerteschaltung 6 bei feuchter Wäsche keine Spannung führt, wird die Torschaltung 11 gesperrt. Sind aber die Fühlelektroden frei von feuchter Wäsche,
so öffnet das Tor 11 und schaltet die Impulse des Taktgenerators
10 auf den Eingang 74 des Impulszählers 7. Für die Dauer der Öffnung des Tores 11 schieben die Taktimpulse nun die in der voreingestellten Startstufe 71 enthaltene Information schrittweise fort.

Sofern sich wieder ein feuchtes Wäschestück über die Fühlelektroden legt, bevor der Impulszähler an seinem Ausgang
75 das Signal zum Beenden des Trockenprozesses abgegeben
hat, wechselt das Ausgangssignal der Auswerteschaltung
6 von binär "1" auf binär "0". Dadurch wird das Tor 11 gesperrt und der Impulszähler 7 angehalten. Ferner führt dieses
Stoppsignal am allgemeinen Löscheingang 76 einer Leseschaltung 77 des Impulszählers 7 dazu, daß die im Zähler 7 fortgeschaltete Information unabhängig vom Status des Impulszählers
gelöscht wird. Außerdem veranlaßt das Stoppsignal am dynami-

schen Eingang 121 die Torschaltung 12 zur Abgabe eines neuen
Setzsignals, das    über die Mischstufe 13 und den Vorwahlschalter 8 wieder in die voreingestellte Startstufe 71 des
Impulszählers 7 eingeschrieben wird. Die Abgabe des Setzsignals ist der Torschaltung 12 deshalb möglich, weil beim
ersten Übergang des Ausgangssignals der Auswerteschaltung 6 von "0" auf "1" die bistabile Kippstufe 14 in
eine Stellung geschaltet hat, in der sie kein Ausgangssignal führt. Kein Ausgangssignal bedeutet am Ausgang des Negators 15 eine binäre "1", so daß die Torschaltung 12 durch
ihren anderen Eingang 122 bereits zur Öffnung vorbereitet
war.

Die in die voreingestellte Startstufe 71 erneut eingeschriebene Information wird nun erst dann wieder im Impulszähler 7
fortgeschaltet, wenn die Fühlelektroden erneut frei von einem
feuchten Wäschestück sind. Der beschriebene Vorgang des Zurücksetzens des Impulszählers 7 wiederholt sich so lange,
bis der Impulszähler 7 übergelaufen ist und an seinem Ausgang 75 ein Signal zum Beenden des Trockenprozesses abgibt,
ohne daß er zwischendurch dadurch angehalten worden ist, daß
das Ausgangssignal der Auswerteschaltung   . 6 infolge wieder
überbrückter Fühlelektroden von binär "1" auf binär "0" wechselt.

Sobald der Impulszähler 7 am Ausgang 75 das Signal zur Beendigung des Trockenprozesses abgibt, wird die Kippstufe 14 in
ihre andere Lage geschaltet, bei der sie ein Ausgangssignal
abgibt. Am Ausgang des Negators 15 liegt dann eine binäre
"0", sodaß die Torschaltung 12 auch für weitere Signalwechsel
von "1" auf "0" am dynamischen Eingang 121 gesperrt bleibt.

Der weitere Schaltungsvorschlag in Figur 3 enthält, soweit
sich die Schaltungsblöcke vergleichen lassen, dieselben Bezugszeichen. Zur Vermeidung von Wiederholungen wird lediglich die Schaltungsänderung beschrieben.

Beim Übergang des Ausgangssignals der Auswerteschaltung 6 von "1" auf "0" veranlaßt das Eingangssignal des dynamischen, allgemeinen Löscheingangs 76 der Leseschaltung 77 des Impulszählers 7, daß die in irgendeiner Zählstufe des Zählers befindliche Information ausgelesen und über den Ausleseausgang 78 der Leseschaltung wieder über die Mischstufe 13 und den Vorwahlschalter 8 in die voreingestellte Startstufe 71 zurückgeführt wird. Es versteht sich von selbst, daß eine solche Schaltungsanordnung nur dort realisiert werden kann, wo ein paralleles Auslesen des Impulszählers möglich ist.

TZP 80/202 E

Patentansprüche

1. Steuervorrichtung für einen Haushalt-Wäschetrockner mit in einer bewegbaren Wäschetrommel angeordneten Fühlelektroden, die bei wechselnder Berührung mit mehr oder weniger feuchten Wäschestücken wechselnde elektrische Meßgrössen abtasten und zur Bemessung der Einschaltdauer eines Impulszählers an eine Auswerteschaltung weiterleiten, dadurch gekennzeichnet, daß der Impulszähler (7) auf seine voreingestellte Startstufe (71, 72, 73) zurücksetzbar geschaltet ist, sobald die Auswerteschaltung (6) ein Stoppsignal ("1" auf "0") abgibt, das dem Übergang von trockenem auf feuchte abgetastete Wäschestücke entspricht.

2. Steuervorrichtung nach Anspruch 1, dadurch gekennzeichnet, daß die voreinstellbaren Startstufen (71, 72, 73) des Impulszählers (7) mit einem Rücksetztor (12) verbindbar sind, das bei Überschreiten der höchsten Zählstufe des Impulszählers (7) gesperrt ist und im entsperrten Zustand ein Setzsignal abgibt, wenn am Ausgang der Auswerteschaltung (6) das Stoppsignal ("1" auf "0") erscheint.

3. Steuervorrichtung nach Anspruch 2, dadurch gekennzeichnet, daß der Impulszähler (7) einen allgemeinen Löscheingang (76) aufweist, der mit dem Ausgang der Auswerteschaltung (6) verbunden ist und nur ein Eingangssignal bildet, wenn das Stoppsignal ("1" auf "0") erscheint.

4. Steuervorrichtung nach Anspruch 1 oder 3, dadurch gekennzeichnet, daß dem Löscheingang (76) des Impulszählers (7) eine Leseschaltung (77) zugeordnet ist, deren Ausgang (78) mit der voreingestellten Startstufe (71) verbindbar ist und beim Auslesen einer belegten Zählstufe das Setzsignal führt.

FIG.1

FIG. 2

FIG.3

Europäisches
Patentamt

**EUROPÄISCHER RECHERCHENBERICHT**

0033367
Nummer der Anmeldung

EP 80 10 7134

| Kategorie | EINSCHLÄGIGE DOKUMENTE | betrifft Anspruch | KLASSIFIKATION DER ANMELDUNG (Int. Cl.³) |
|---|---|---|---|
| | Kennzeichnung des Dokuments mit Angabe, soweit erforderlich, der maßgeblichen Teile | | |
| | US - A - 3 702 030 (JANKE)<br>* Spalte 2, Zeilen 15-67; Spalte 3, Zeilen 1-35; Spalte 4, Zeilen 44-67; Spalte 5, Zeilen 1-16 und 65-67; Spalte 6; Spalte 7, Zeilen 1-36 * | 1-4 | D 06 F 58/28<br>G 05 D 22/02 |
| D/A | DE - B - 1 610 295 (WESTINGHOUSE ELECTRIC)<br>* Spalte 5, Zeilen 47-68; Spalte 6, Zeilen 1-48 * | 1 | |
| | | | **RECHERCHIERTE SACHGEBIETE (Int. Cl.³)**<br><br>D 06 F<br>G 05 D |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06.05.1981 | D'HULSTER |

EPA form 1503.1   06.78